# EUROPÄISCHE PATENTANMELDUNG

(11) **EP 2 218 382 A1**
(43) Veröffentlichungstag der Anmeldung: **18.08.2010**
(21) Anmeldenummer: 10001387.9
(22) Anmeldetag: 10.02.2010
(51) Int. Cl.: A47J 43/28

(54) **Messerähnliche Vorrichtung zur Entnahme von insbesondere pastösen Lebensmitteln**

(30) Priorität: 11.02.2009 DE 102009008392
(71) Anmelder: Laake, Annett, 42657 Solingen (DE)
(72) Erfinder: Laake, Annett, 42657 Solingen (DE)
(74) Vertreter: Michalski, Stefan

(57) **Zusammenfassung**

Die Erfindung betrifft eine messerähnliche Vorrichtung (1) zur Entnahme von pastösen Lebensmitteln aus insbesondere unrunden Behältern mit einem Handgriff (2), einem sich an dem Handgriff (2) anschließenden Stielabschnitt (3) und in Fortführung des Stielabschnitts (3) ausgebildeten verbreiterten Arbeitsabschnitt (4), wobei der Arbeitsabschnitt (4) mindestens eine Schaberkante (5) aufweist, wobei die Vorrichtung einen bogenförmig ausgestalteten Vorsprung (6) im Übergangsbereich zwischen Stielabschnitt (3) und Arbeitsabschnitt (4) gegenüberliegend zur Schaberkante (5) aufweist.

## Beschreibung

Die Erfindung betrifft eine messerähnliche Vorrichtung zur Entnahme von insbesondere pastösen Lebensmitteln aus Aufbewahrungsbehältern gemäß dem Oberbegriff des Patentanspruchs 1.

Zur Entnahme von streichfähigen, pastösen Lebensmitteln aus deren Verkaufs- und Aufbewahrungsbehältern, insbesondere aus unrunden Gläsern, sind verschiedene messerähnliche Schaber bekannt, die mindestens eine Schaberkante und einen sich daran anschließenden Griff aufweisen. Insgesamt bestehen bei den gängigen Aufbewahrungsgefäßen zwei unterschiedliche Zonen, die eine vollständige oder nahezu vollständige Entnahme mittels messerähnlichen Schabern erschweren. Zum Einen ist der Boden der Lebensmittelgläser häufig zur Mitte aufgewölbt, so dass keine ebene Fläche gebildet wird. Zum Anderen verjüngen sich die Behälter nach oben häufig, um einen Ansatz für einen Verschluss wie beispielsweise ein Gewinde für einen Schraubdeckel bereitzustellen. Auf diese Weise wird eine Schulter gebildet, die mit üblichen Messern oder gar noch breiteren Schabern nur schwer zu erreichen ist.

In diesem Zusammenhang offenbart das deutsche Gebrauchsmuster DE G 83 34 064 ein messerähnliches Gerät, bestehend aus einem Stiel, einer Handhabe und einem messerartigen, als Schaber ausgestalteten Abschnitt, der schneidenfrei ausgebildet ist und mindestens zwei unterschiedlich abgerundete Kanten beziehungsweise Schaberabschnitte aufweist. Dennoch besteht hier aufgrund des ungünstigen Eintrittswinkels des Geräts in Bezug zur schulterförmigen Ausbuchtung im oberen Abschnitt des Aufbewahrungsbehälters immer noch die Schwierigkeit, die verbliebenen Volumina des pastösen Lebensmittels zu erreichen.

Ein weiterer Nachteil des genannten Schabers liegt darin, dass er zwar eine obere Abrundung der Schaberkante aufweist, die in ihrem Radius und in ihrem Bogenwinkel der Schulter des Behälters angepasst ist, jedoch gerade daher nur für einen bestimmten Typus von Aufbewahrungsbehälter geeignet ist.

Aufgabe der Erfindung ist es daher eine einfache und verbesserte Vorrichtung zur Entnahme von pastösen Lebensmitteln aus ihren Verkaufs- und Aufbewahrungsbehältern bereitzustellen, die universell mit einer Vielzahl von unterschiedlichen Behältern eingesetzt werden kann.

Erfindungsgemäß wird dies durch eine messerähnliche Vorrichtung gemäß Anspruch 1 erreicht.

Erfindungsgemäß wird vorgeschlagen, eine messerähnliche Vorrichtung mit einem Handgriff, einem sich an dem Handgriff anschließenden Stielabschnitt und in Fortführung des Stielabschnitts ausgebildeten verbreiterten Arbeitsabschnitt bereitzustellen, wobei der Arbeitsabschnitt mindestens eine Schaberkante aufweist. Die Vorrichtung weist erfindungsgemäß einen bogenförmig ausgestalteten Vorsprung im Übergangsbereich zwischen Stielabschnitt und Arbeitsabschnitt gegenüberliegend zur Schaberkante auf.

Unter dem Begriff des bogenförmig ausgestalteten Vorsprungs wird im Rahmen der vorliegenden Erfindung jeder Vorsprung verstanden, der im Bereich seiner Spritze eine Abrundung aufweist. Eingeschlossen sind somit auch solche Vorsprünge, die neben der Abrundung Bereiche mit geraden Kantenverläufen aufweisen.

Es ist mit anderen Worten bei der erfindungsgemäßen Vorrichtung vorgesehen, einen Vorsprung im oberen Bereich der Schaberfläche gegenüberliegend zur Schaberkante derart auszugestalten, dass der Vorsprung auf der Oberseite der Vorrichtung hervorsteht. Dadurch kann vorteilhafterweise ein Eingreifen des Vorsprungs in die durch eine Verjüngung des Behälters entstehende Schulter erzielt werden, ohne dass ein Abschrägen oder Kippen der Vorrichtung nötig sind.

Ein weiterer Vorteil der erfindungsgemäßen Vorrichtung ist, dass durch den bogenförmigen Vorsprung und seine Anordnung im Übergangsbereich zum Stielabschnitt gegenüberliegend zur Schaberkante eine deutlich verbesserte Universalität hinsichtlich unterschiedlicher Größen und Ausgestaltungen der Behälter erreicht wird. So kann die erfindungsgemäße messerähnliche Vorrichtung zur Entnahme von verschiedensten pastösen Lebensmitteln aus Behältern unterschiedlicher Größe eingesetzt werden. Beispiele für solche pastösen Lebensmittel sind neben Konfitüren und Marmeladen auch Nussnougatcremes, Erdnussbutter, Milchprodukte wie Jogurt und Pudding, fertige Nudelsaucen, Gewürzpasten, Wurstwaren oder Babynahrung.

Vorteilhafte Ausgestaltungen und Weiterbildungen der erfindungsgemäßen Vorrichtung ergeben sich aus den abhängigen Ansprüchen.

In einer bevorzugten Ausführungsform kann die Schaberkante schneidenfrei ausgebildet sein.
Auf diese Weise kann eine nahezu vollständige Anlage der Schaberkante an die Innenseite des Lebensmittelbehälters erzielt werden, so dass ein leichtes Entnehmen und eine einfache Handhabung gewährleistet wird. Außerdem kann damit eine Verletzungsgefahr durch eine Schneide insbesondere für Kinder beim Gebrauch vermieden werden.

Gleichermaßen bevorzugt kann sich der Arbeitsabschnitt nur auf eine Seite von der Stielachse erstrecken. Eine solche asymmetrische Ausgestaltung der Vorrichtung vereinfacht die Entnahme zusätzlich, da ein unerwünschtes Abschrägen oder Kippen der Vorrichtung in Bezug auf die vertikale Hauptachse des Behälters verringert werden kann. Dieses Abschrägen oder Kippen ist insbesondere dann notwendig, wenn solche Innenseiten des Behälters erreicht werden sollen, die in Ausbuchtungen durch einen unrunden Aufbau des Behälters entstehen. Somit wird die Anpassung der erfindungsgemäßen Vorrichtung auch an solche Aufbewahrungsbehälter verbessert.

In einer weiteren bevorzugten Ausgestaltung der erfindungsgemäßen Vorrichtung kann der Arbeitsabschnitt einstückig mit dem Stielabschnitt und dem Handgriff ausgebildet sein.
Durch einen einstückigen Aufbau wird nicht nur die Herstellung der erfindungsgemäßen Vorrichtung erleichtert, sondern es entstehen zudem keine Übergänge zwischen einzelnen Abschnitten, so dass sich die Vorrichtung leicht reinigen lässt und keine Reste in Zwischenräumen verbleiben können.

Nach einer weiteren bevorzugten Ausgestaltung der erfindungsgemäßen Vorrichtung ist vorgesehen, dass der Arbeitsabschnitt biegesteif ausgebildet ist.

Damit kann eine gute und direkte Kraftübertragung auf die Schaberkante und den bogenförmigen Vorsprung erzielt werden, so dass eine exakte Handhabung erreicht wird. Weiterhin kann auf diese Weise ein Auftragen des pastösen Lebensmittels auf eine Unterlage oder auf Brot leicht erfolgen.

In einer alternativen, ebenfalls bevorzugten Ausgestaltung kann der Arbeitsabschnitt auch flexibel ausgebildet sein oder eine flexible Schaberkante aufweisen. Auf diese Weise können Unebenheiten des Behälters ausgeglichen werden ohne die möglichst großflächige Anlage an die Oberfläche des Behälters zu beeinträchtigen.

Weiter bevorzugt kann der der Arbeitsabschnitt durchgehend eine gleiche Stärke aufweisen. Damit kann eine kostengünstige Herstellung des Arbeitsabschnitts beispielsweise aus plattenförmigem Material erzielt werden.

In einer weiteren bevorzugten Ausgestaltung der erfindungsgemäßen Vorrichtung kann die Vorrichtung aus Kunststoff bestehen.
Der Kunststoff wird bevorzugt ausgewählt aus der Gruppe der für den Umgang mit Lebensmitteln geeigneten Kunststoffe wie beispielsweise Melamin, Polyethylen, Polypropylen, Polyamid, Polycarbonat, faserverstärkte Polymere, Polystyrol, Styrol-Acrylnitril, PET und Polyurethan. Bevorzugt können schlagfeste Kunststoffe verwendet werden, die zudem Geschirrspülmaschinen-geeignet sind. Vorteilhafterweise kann die Herstellung als Spritzgussformteil in großer Stückzahl erfolgen.
Außerdem können die erfindungsgemäßen Kunststoff-Schaber keine scharfen Kanten aufweisen und so ungefährlich auch für den Gebrauch durch Kinder und zur Entnahme von Babynahrung aus Gläsern geeignet sein. Daneben können die Kunststoffe verschiedene bunte oder nicht-bunte Farben und/oder Muster aufweisen und sind kostengünstig und leicht einzufärben.

Gleichermaßen kann die erfindungsgemäße Vorrichtung aus einem Metall, beispielsweise aus Edelstahl gefertigt sein.

Weiterhin kann die dem Handgriff abgewandte Stirnseite des Arbeitsabschnitts abgeschrägt sein.
Auf diese Weise kann eine gute Erreichbarkeit der bodenseitige Oberflächen des Aufbewahrungsbehälters erreicht werden.

In einer Fortbildung dieser Ausgestaltung kann die dem Handgriff abgewandte Stirnseite des Arbeitsabschnitts außerdem im Übergangsbereich zur Schaberkante einen bogenförmigen Endabschnitt aufweisen. Der bogenförmige Endabschnitt kann die Zugänglichkeit der erfindungsgemäßen Vorrichtung insbesondere zu Randbereichen solcher Bodenoberflächen verbessern, die keine ebene Fläche bilden sondern zur Mitte hin aufgewölbt sind. Ebenso wie der bogenförmige Vorsprung im oberen Bereich der messerähnlichen Vorrichtung wird durch den entsprechenden Endabschnitt an der Stirnseite des Arbeitsabschnitts eine gute Universalität in Bezug auf unterschiedliche Behälterformen gewährleistet.

Die Bogenform des Vorsprungs gegenüberliegend zur Schaberkante kann in Radius und Bogenwinkel an eine Behälterform angepasst sein. Damit kann beispielsweise ein zum Lebensmittelprodukt des Behälters komplementärer Schaber im Sinne eines Werbemittels bereitgestellt werden.

Die Erfindung wird nachfolgend in beispielhafter Weise in Verbindung mit der Zeichnung erläutert, ohne auf diese Ausführungsform beschränkt zu sein.

In dieser zeigt:

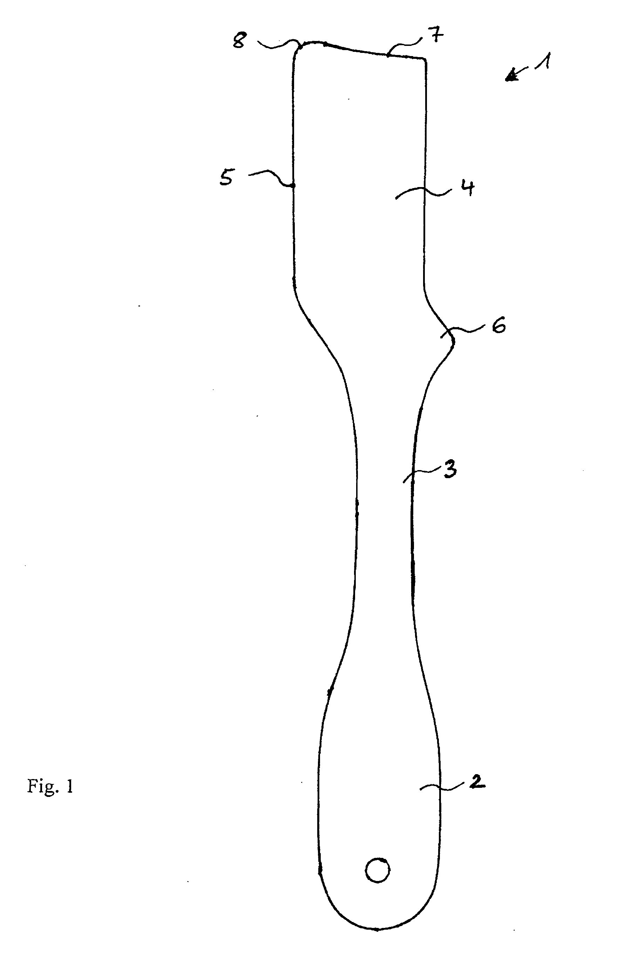

Fig. 1 eine schematische Darstellung einer messerähnlichen Vorrichtung.

Die Fig. 1 zeigt eine schematische Darstellung einer erfindungsgemäßen messerähnlichen Vorrichtung **1** beispielsweise aus Kunststoff mit einem Handgriff **2,** einem sich an dem Handgriff anschließenden Stielabschnitt **3** und einem in Fortführung des Stielabschnitts ausgebildeten verbreiterten Arbeitsabschnitt **4.** Der Arbeitsabschnitt **4** weist eine Schaberkante **5** auf, welche eine verringerte Stärke des Materials haben kann. Gleichermaßen kann der gesamte Arbeitsabschnitt die gleiche Stärke aufweisen. Bevorzugt ist die Schaberkante **5** schneidenfrei ausgebildet. Der Arbeitsabschnitt **4** erstreckt sich im Wesentlichen nur auf eine Seite von der Stielachse. Erfindungsgemäß umfasst die messerähnliche Vorrichtung einen bogenförmigen Vorsprung **6** gegenüberliegend zur Schaberkante **5,** der im Übergangsbereich des Stielabschnitts **3** zum Arbeitsabschnitt **4** positioniert ist. Die Bogenform des Vorsprungs **6** kann in Radius und Bogenwinkel an eine Behälterform angepasst sein. Die dem Handgriff **2** abgewandte Stirnseite **7** des Arbeitsabschnitts **4** ist abgeschrägt und weist im Übergangsbereich zur Schaberkante **5** ein bogenförmigen Endabschnitt **8** auf.

Zusammenfassend wird demnach ein messerähnlicher Schaber zur Entnahme von streichfähigen Lebensmitteln aus ihren Behältern zur Verfügung gestellt, bei dem durch einen bogenförmigen Vorsprung im oberen Bereich des Stiels gegenüberliegend zur Schaberkante eine vollständige oder nahezu vollständige Entnahme des Lebensmittels aus dem Schulterbereich des Behälters auf einfache Weise erzielt werden kann.

## Patentansprüche

1. Messerähnliche Vorrichtung (1) mit einem Handgriff (2), einem sich an dem Handgriff (2) anschließenden Stielabschnitt (3) und in Fortführung des Stielabschnitts (3) ausgebildeten verbreiterten Arbeitsabschnitt (4), wobei der Arbeitsabschnitt (4) mindestens eine Schaberkante (5) aufweist, **dadurch gekennzeichnet, dass** die Vorrichtung einen bogenförmig ausgestalteten Vorsprung (6) im Übergangsbereich zwischen Stielabschnitt (3) und Arbeitsabschnitt (4) gegenüberliegend zur Schaberkante (5) aufweist.

2. Vorrichtung nach Anspruch 1, **dadurch gekennzeichnet, dass** die Schaberkante (5) schneidenfrei ausgebildet ist.

3. Vorrichtung nach Anspruch 1 oder 2, **dadurch gekennzeichnet, dass** der Arbeitsabschnitt (4) sich nur auf eine Seite von der Stielachse erstreckt.

4. Vorrichtung nach einem der Ansprüche 1 bis 3 **dadurch gekennzeichnet, dass** der Arbeitsabschnitt (4) einstückig mit dem Stielabschnitt (3) und dem Handgriff (2) ausgebildet ist.

5. Vorrichtung nach einem der Ansprüche 1 bis 4 **dadurch gekennzeichnet, dass** der Arbeitsabschnitt (4) biegesteif ausgebildet ist.

6. Vorrichtung nach einem der Ansprüche 1 bis 5, **dadurch gekennzeichnet, dass** der Arbeitsabschnitt (4) durchgehend eine gleiche Stärke aufweist.

7. Vorrichtung nach einem der Ansprüche 1 bis 6, **dadurch gekennzeichnet, dass** die Vorrichtung aus Kunststoff besteht.

8. Vorrichtung nach einem der Ansprüche 1 bis 7, **dadurch gekennzeichnet, dass** die dem Handgriff (2) abgewandte Stirnseite (7) des Arbeitsabschnitts (4) abgeschrägt ist.

9. Vorrichtung nach Anspruch 8, **dadurch gekennzeichnet, dass** die dem Handgriff (2) abgewandte Stirnseite (7) des Arbeitsabschnitts (4) im Übergangsbereich zur Schaberkante (5) ein bogenförmigen Endabschnitt (8) aufweist.

10. Vorrichtung nach einem der Ansprüche 1 bis 9, **dadurch gekennzeichnet, dass** die Bogenform des Vorsprungs (6) in Radius und Bogenwinkel an eine Behälterform angepasst ist.
